# EUROPEAN PATENT APPLICATION

(11) **EP 4 057 127 A2**
(43) Date of publication of application: **14.09.2022**
(21) Application number: 22177417.7
(22) Date of filing: 07.06.2022
(51) Int. Cl.: G06F 3/147, G09G 5/38

(54) **DISPLAY METHOD, DISPLAY APPARATUS, DEVICE, STORAGE MEDIUM, AND COMPUTER PROGRAM PRODUCT**

(30) Priority: 25.06.2021 CN 202110709951
(71) Applicant: Apollo Intelligent Connectivity (Beijing) Technology Co., Ltd., Beijing 100176 (CN)
(72) Inventor: DENG, Sunan, Beijing, 100176 (CN)
(74) Representative: Lucke, Andreas

(57) **Abstract**

The present disclosure provides a display method, a display apparatus, a device, a storage medium, and a computer program product, relates to the technical field of artificial intelligence, and specifically relates to the technical field of intelligent transport and deep learning. A specific embodiment of the method includes: acquiring a first image, where the first image is an image of an eyeball state of a driver; acquiring a second image, where the second image is an image of a surrounding environment of a vehicle of the driver; determining an object of point of interest (POI) based on the first image and the second image; and determining a target display position of the object of POI, and displaying the object of POI at the target display position. This embodiment can present, based on a sight line of a driver, an object corresponding to the sight line.

## Description

### TECHNICAL FIELD

The present disclosure relates to the field of computers, specifically to the field of artificial intelligence such as intelligent transport and deep learning, and more specifically to a display method, a display apparatus, a device, a storage medium, and a computer program product.

### BACKGROUND

With the rapid development of computer technologies, an AR (augmented reality) technology has been widely used, and the AR overlays digital images in the real world that people can see, to integrate information projected by the AR with the real environment.

At present, a head up display device, hereinafter referred to as HUD, is a flight assistance device commonly used on aircrafts. Head-up means that a pilot can see important messages without the need for lowering his head. The HUD, first appeared on military aircrafts, projects the data commonly used in flight directly onto the aircraft windshield in front of the pilot, thereby reducing the frequency of the pilot looking down at the instruments, and avoiding distraction and loss of control over the state awareness.

### SUMMARY

The present disclosure provides a display method, a display apparatus, a device, a storage medium, and a computer program product.

According to a first aspect of the present disclosure, a display method is provided, including: acquiring a first image, where the first image is an image of an eyeball state of a driver; acquiring a second image, where the second image is an image of a surrounding environment of a vehicle of the driver; determining an object of point of interest (POI) based on the first image and the second image; and determining a target display position of the object of POI, and displaying the object of POI at the target display position.

According to a second aspect, a display apparatus is provided, including: a first acquiring module configured to acquire a first image, where the first image is an image of an eyeball state of a driver; a second acquiring module configured to acquire a second image, where the second image is an image of a surrounding environment of a vehicle of the driver; a first determining module configured to determine an object of point of interest (POI) based on the first image and the second image; and a second determining module configured to determine a target display position of the object of POI, and display the object of POI at the target display position.

According to a third aspect of the present disclosure, a non-transitory computer-readable storage medium storing computer instructions is provided, where the computer instructions cause a computer to execute the method according to any one implementation in the first aspect or the second aspect.

According to a fourth aspect of the present disclosure, a computer program product is provided, including a computer program, where the computer program, when executed by a processor, implements the method according to any one implementation in the first aspect or the second aspect.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not constitute any limitation to the present disclosure.
Fig. 1 is a diagram of an example system architecture in which embodiments of the present disclosure may be implemented;
Fig. 2 is a flowchart of an embodiment of a display method according to the present disclosure;
Fig. 3 is a flowchart of another embodiment of the display method according to the present disclosure;
Fig. 4 is a flowchart of still another embodiment of the display method according to the present disclosure;
Fig. 5 is a flowchart of yet another embodiment of the display method according to the present disclosure;
Fig. 6 is a schematic structural diagram of an embodiment of a display apparatus according to the present disclosure; and
Fig. 7 is a block diagram of an electronic device configured to implement the display method according to embodiments of the present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

It should be noted that some embodiments in the present disclosure and some features in the embodiments may be combined with each other on a non-conflict basis. The present disclosure will be described in detail below with reference to the accompanying drawings and in combination with the embodiments.

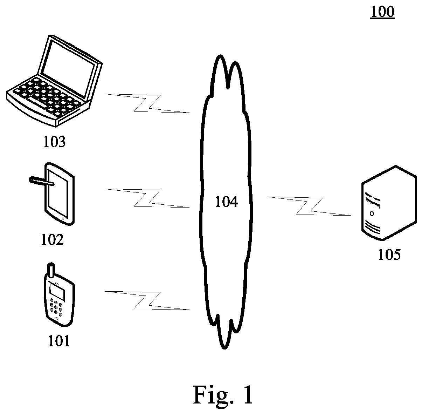

Fig. 1 shows an example system architecture 100 in which an embodiment of a display method or a display apparatus according to the present disclosure may be implemented.

As shown in Fig. 1, the system architecture 100 may include terminal devices 101, 102, and 103, a network 104, and a server 105. The network 104 serves as a medium providing a communication link between the terminal devices 101, 102, and 103, and the server 105. The network 104 may include various types of connections, such as wired or wireless communication links, or optical cables.

A user may interact with the server 105 using the terminal devices 101, 102, and 103 via the network 104, for example, to receive or send information. The terminal devices 101, 102, and 103 may be provided with various client applications,

The terminal devices 101, 102, and 103 may be hardware, or may be software. When the terminal devices 101, 102, and 103 are hardware, the terminal devices may be various electronic devices, including but not limited to a smart phone, a tablet computer, a laptop portable computer, a desktop computer, and the like. When the terminal devices 101, 102, and 103 are software, the terminal devices may be installed in the above electronic devices, or may be implemented as a plurality of software programs or software modules, or may be implemented as a single software program or software module. This is not specifically limited here.

The server 105 may provide various services. For example, the server 105 may analyze and process a first image and a second image acquired from the terminal devices 101, 102, and 103, and generate a processing result (e.g., an object of POI and a target display position of the object of POI).

It should be noted that the server 105 maybe hardware, or maybe software. When the server 105 is hardware, the server may be implemented as a distributed server cluster composed of a plurality of servers, or may be implemented as a single server. When the server 105 is software, the server may be implemented as a plurality of software programs or software modules (e.g., software programs or software modules for providing distributed services), or may be implemented as a single software program or software module. This is not specifically limited here.

It should be noted that the display method provided in embodiments of the present disclosure is generally executed by the server 105. Accordingly, the display apparatus is generally provided in the server 105.

It should be understood that the numbers of the terminal devices, the network, and the server in Fig. 1 are merely illustrative. Any number of terminal devices, networks, and servers may be provided based on actual requirements.

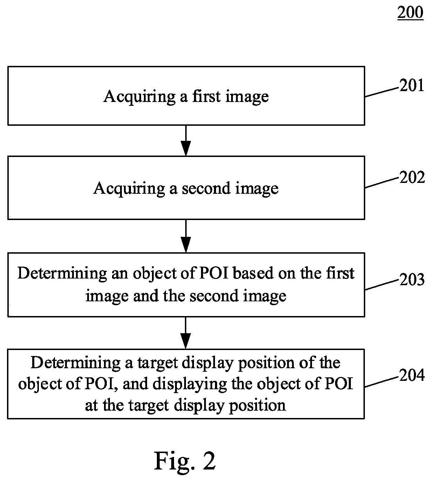

Further referring to Fig. 2, a process 200 of an embodiment of a display method according to the present disclosure is shown. The display method includes the following steps:
Step 201: acquiring a first image.

In the present embodiment, an executing body (e.g., the server 105 shown in Fig. 1) of the display method may acquire the first image, where the first image is an image of an eyeball state of a driver.

The first image may be collected by an image sensor in a vehicle of the driver. The image sensor in the present embodiment is a camera sensor (hereinafter referred to as a camera), or maybe other image sensors according to actual situations. This is not limited in the present disclosure. The camera may take the image of the eyeball state of the driver in real time.

Step 202: acquiring a second image.

In the present embodiment, the executing body may acquire a second image, where the second image is an image of a surrounding environment of the vehicle of the driver.

The second image may be collected by another camera in the vehicle of the driver, i.e., two cameras may be installed within the vehicle of the driver, one of the cameras may internally collect the image of the eyeball state of the driver, and the other camera may collect the image of the surrounding environment of the vehicle of the driver. Of course, other number of cameras may alternatively be provided according to the actual situations. This is not specifically limited in the present disclosure.

The second image may contain buildings on both sides of a road on which the vehicle is traveling, and may also contain, e.g., obstacles.

Step 203: determining an object of point of interest (POI) based on the first image and the second image.

In the present embodiment, the executing body may determine the object of POI (point of interest) based on the first image acquired in step 201 and the second image acquired in step 202. In a geographical information system, a POI may be a house, a mailbox, a bus station, and the like.

In the present embodiment, in a process when the vehicle is traveling, there may be many corresponding buildings or other corresponding signs on both sides of a road. The present disclosure displays information of the object of POI based on a sight line of the driver, and displays the object of POI on a front windshield of the vehicle, thereby making the driver more convenient acquire relevant information. Therefore, in the present embodiment, the executing body may determine the object of POI in the second image based on the first image representing the eyeball state of the driver, where the object of POI is an object at which the driver looks.

It should be noted that a display screen of the object of POI on the front windshield may be projected by a head up display device within the vehicle. The head up display device can project important driving information such as a speed and a navigation onto the front windshield of the vehicle, such that the driver can see the important driving information such as the speed and the navigation without lowering his head or turning his head.

Step 204: determining a target display position of the object of POI, and displaying the object of POI at the target display position.

In the present embodiment, the executing body may determine the target display position of the object of POI, and display the object of POI at the target display position. The executing body may determine, based on position information of the object of POI in the second image, position information of the object of POI on the display screen of the front windshield. The position information on the display screen should correspond to position information of the object of POI in reality (i.e., the position information in the second image), thereby more intuitively and accurately displaying the object of POI to the driver.

As an example, by analyzing the first image, it is determined that the driver looks in a left front direction of his vehicle, then an object (building) in the top left corner area of the second image is the object of POI, and the target display position of the object of POI on the display screen of the front windshield should be at the top left corner.

The display method provided in embodiments of the present disclosure first acquires a first image representing an eyeball state of a driver; then acquires a second image representing a surrounding environment of a vehicle of the driver; then determines an object of point of interest (POI) based on the first image and the second image; and finally determines a target display position of the object of POI, and displays the object of POI at the target display position. The present disclosure provides a display method that can determine an object of POI and a target display position of the object of POI on a display screen in real time based on an image of an eyeball state of a driver and an image of a surrounding environment, thereby displaying the object of POI to the driver, so that the driver does not need to manually search to determine the POI, and the object of POI can be determined and displayed based on a sight line of the driver. This method ensures the convenience and safety during the vehicle traveling.

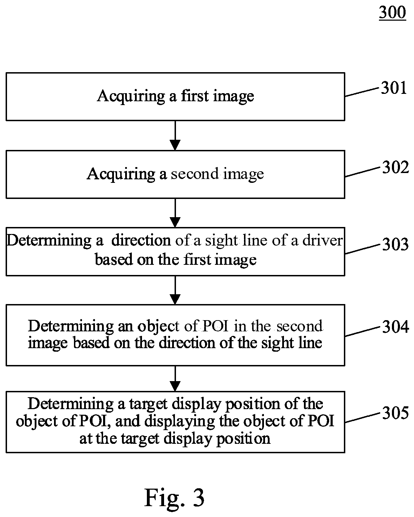

Further referring to Fig. 3, Fig. 3 shows a process 300 of another embodiment of the display method according to the present disclosure. The display method includes the following steps:
Step 301: acquiring a first image.
Step 302: acquiring a second image.
   Steps 301 and 302 are substantially consistent with steps 201 and 202 in the above embodiments, and specific implementations of steps 301 and 302 may be referred to the above description of steps 201 and 202, and are not repeated here.
Step 303: determining a direction of a sight line of a driver based on the first image.

In the present embodiment, an executing body (e.g., the server 105 shown in Fig. 1) of the display method may determine the direction of the sight line of the driver based on the first image.

When the driver looks at different buildings on both sides of a road, the directions of the sight lines of the driver are different, and corresponding eyeball orientation information of the driver is also different. Therefore, in the present embodiment, the eyeball orientation information of the driver may be determined based on the first image representing the eyeball state of the driver, thereby determining the direction of the sight line of the driver.

Step 304: determining an object of POI in the second image based on the direction of the sight line.

In the present embodiment, the executing body may determine the object of POI in the second image based on the direction of the sight line of the driver determined in step 303, and determine a target display position of the object of POI on a head up display screen, where the head up display screen is a screen projected by a head up display device.

Since the second image contains a plurality of objects in a surrounding environment of a vehicle of the driver, when the driver looks in a direction or at an object, it is necessary to determine a target object at which the driver looks.

In the present embodiment, after determining a direction of a sight line of the driver, an area corresponding to the direction of the sight line of the driver in the second image maybe determined, and an object in this area is the object of POI.

In some alternative implementations of the present embodiment, step 304 includes: judging whether there is a target object in the direction of the sight line; and determining the object of POI in the second image based on the judging result. In the present implementation, whether there is a corresponding target object in the direction of the sight line of the driver may be judged, and the object of POI in the second image may be determined based on the judging result, thereby displaying the information of the object corresponding to a sight line of the driver based on the sight line of the driver, and achieving object tracking based on the sight line of the driver.

Step 305: determining a target display position of the object of POI, and displaying the object of POI at the target display position.

Step 305 is substantially consistent with step 204 in the above embodiments, and a specific implementation of step 305 may be referred to the above description of step 204, and is not repeated here.

As can be seen from Fig. 3, compared with the corresponding embodiment of Fig. 2, the display method in the present embodiment may determine a direction of a sight line of a driver based on a first image, and then determine an object of POI in a second image based on direction of the sight line. The display method highlights the step of determining the object of POI based on the direction of the sight line, which can improve the accuracy of the determined information, and has a wider range of applications.

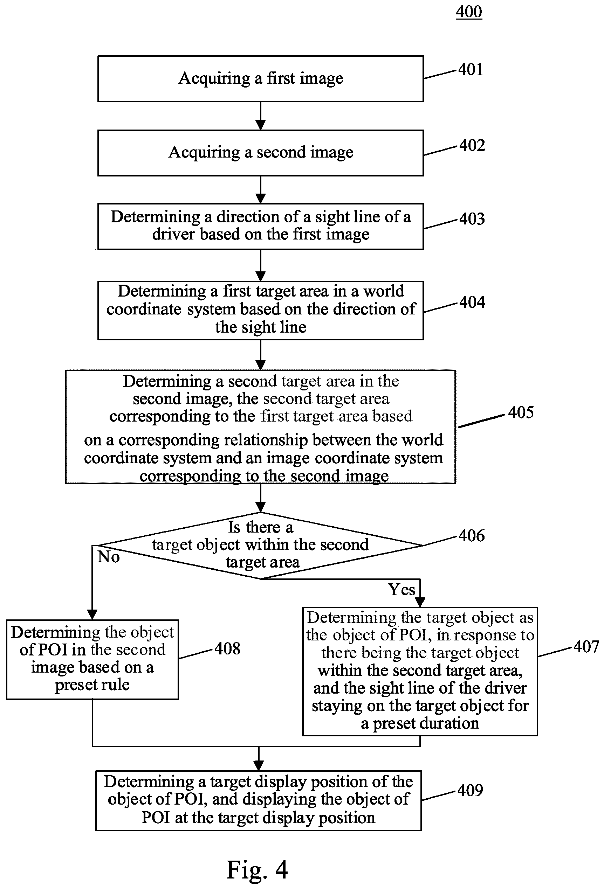

Further referring to Fig. 4, Fig. 4 shows a process 400 of still another embodiment of the display method according to the present disclosure. The display method includes the following steps:
Step 401: acquiring a first image.
Step 402: acquiring a second image.
Step 403: determining a direction of a sight line of a driver based on the first image.
   Steps 401 to 403 are substantially consistent with steps 301 to 303 in the above embodiments, and specific implementations of steps 401 to 403 maybe referred to the above description of steps 301 to 303, and are not repeated here.
Step 404: determining a first target area in a world coordinate system based on the direction of the sight line.

In the present embodiment, an executing body (e.g., the server 105 shown in Fig. 1) of the display method may determine the first target area in the world coordinate system based on the direction of the sight line. The world coordinate system is a coordinate system in the real world. After the direction of the sight line of the driver is determined, the first target area in a real coordinate system may be determined based on the direction of the sight line. For example, when the direction of the sight line of the driver is determined as left front left direction, an area corresponding to the left front direction in the world coordinate system may be determined to be the first target area.

Step 405: determining a second target area in the second image, the second target area corresponding to the first target area, based on a corresponding relationship between the world coordinate system and an image coordinate system corresponding to the second image.

In the present embodiment, the executing body may determine the second target area in the second image, the second target area corresponding to the first target area, based on the corresponding relationship between the world coordinate system and the image coordinate system corresponding to the second image.

Since the second image is an image of an object in a real environment, the second image corresponds to the world coordinate system. There is also an image coordinate system in the second image, such that the second target area in the second image, the second target area corresponding to the first target area, may be determined based on the corresponding relationship between the world coordinate system and the image coordinate system corresponding to the second image. The second target area is an area in the second image, the area corresponding to the direction of the sight line of the driver.

Step 406: judging whether there is a target object within the second target area.

In the present embodiment, the executing body may determine whether there is the target object within the second target area, i.e., determine whether there is a corresponding target object in the direction of the sight line of the driver.

When there is a target object within the second target area, step 407 is executed; otherwise, step 408 is executed.

Step 407: determining the target object as the object of POI, in response to there being the target object within the second target area, and the sight line of the driver staying on the target object for a preset duration.

In the present embodiment, the executing body may determine that the driver looks at the target object when there is the target object within the second target area and the sight line of the driver stays on the target object for the preset duration. In this case, the target object is determined as the object of POI. For example, when there is a building within the second target area, and the sight line of the driver stays on the building for 2 seconds, the building is determined as the object of POI.

Step 408: determining the object of POI in the second image based on a preset rule.

In the present embodiment, the executing body may determine the object of POI in the second image based on the preset rule when there is no target object within the second target area. The preset rule may be setting all objects in the second image as objects of POI. Since the second image may contain more than one object (building), all objects in the second image may be preset as the objects of POI. The preset rule may alternatively be selecting an object of POI in the second image based on a historical behavior of the driver. For example, the executing body acquires that the objects of POI previously determined for the driver are all shopping malls, and then the executing body may select a shopping mall in the second image as a current object of POI. Of course, the rule may alternatively be set and determined according to actual requirements. This is not specifically limited in the present disclosure.

Step 409: determining a target display position of the object of POI, and displaying the object of POI at the target display position.

Step 409 is substantially consistent with step 305 in the above embodiments, and a specific implementation of step 409 may be referred to the above description of step 305, and is not repeated here.

In some alternative implementations of the present embodiment, step 409 includes: determining, based on a corresponding relationship between the image coordinate system and a display coordinate system corresponding to a head up display screen, a target display position of the object of POI on the head up display screen, and displaying the object of POI at the target display position. In the present embodiment, the head up display screen is projected by a head up display device, and there is also a corresponding display coordinate system in the head up display screen. Since the object of POI is an object in the second image, and there is also a corresponding relationship between the display coordinate system and the image coordinate system corresponding to the second image, the executing body may determine the target display position of the object of POI on the head up display screen based on the corresponding relationship between the display coordinate system and the image coordinate system, and display the object of POI at the target display position.

As can be seen from Fig. 4, compared with the corresponding embodiment of Fig. 3, the display method in the present embodiment judges whether there is a target object in a direction of a sight line of a driver, determines an object of POI in a second image based on a judging result, determines a target display position on a head up display screen based on a position of the object of POI in the second image, and finally displays the object of POI at the target display position, thereby performing targeted display based on the sight line of the driver, making the displayed information correspond to the reality, and making it more convenient for the driver to acquire information.

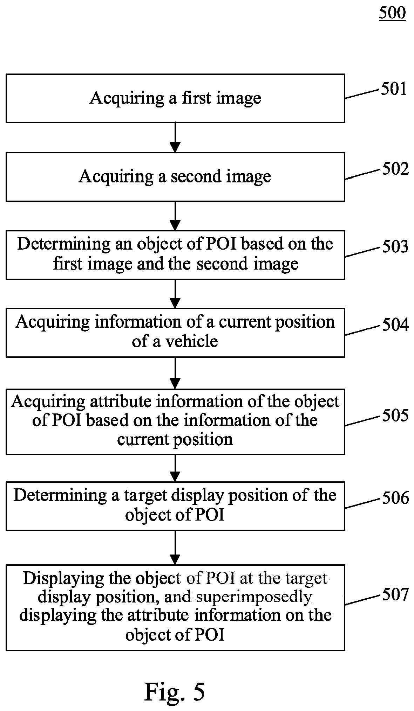

Further referring to Fig. 5, Fig. 5 shows a process 500 of yet another embodiment of the display method according to the present disclosure. The display method includes the following steps:
Step 501: acquiring a first image.
Step 502: acquiring a second image.
Step 503: determining an object of POI based on the first image and the second image.
   Steps 501 to 503 are substantially consistent with steps 201 to 203 in the above embodiments, and specific implementations of steps 501 to 503 maybe referred to the above description of steps 201 to 203, and are not repeated here.
Step 504: acquiring information of a current position of a vehicle.

In the present embodiment, an executing body (e.g., the server 105 shown in Fig. 1) of the display method may acquire the information of the current position of the vehicle. The information of the current position may be obtained by a GPS (global positioning system) of the vehicle, or by an IMU (inertial measurement unit) sensor of the vehicle. This is not specifically limited in the present disclosure. Current geographic position information may be coordinates of the current position in the world coordinate system.

Step 505: acquiring attribute information of the object of POI based on the information of the current position.

In the present embodiment, the executing body may acquire the attribute information of the object of POI based on the information of the current position acquired in step 504. For example, the attribute information of the object of POI may be acquired from a map based on the coordinates of the current position. The attribute information may include, e.g., name and category information of the object of POI. For example, when the object of POI is a shopping mall, its attribute information may include information, such as a name of the shopping mall, promotion activities of stores in the shopping mall, and discount information of activities. Since the object of POI is an object in which the driver is interested, in the present embodiment, the attribute information of the object of POI may alternatively be acquired, so as to feed back more comprehensive information to the driver.

Step 506: determining a target display position of the object of POI.

In the present embodiment, the executing body may determine the target display position of the object of POI.

Step 506 is substantially consistent with step 204 in the above embodiments, and a specific implementation of step 506 maybe referred to the above description of step 204, and is not repeated here.

Step 507: displaying the object of POI at the target display position, and superimposedly displaying the attribute information on the object of POI.

In the present embodiment, the executing body may display the object of POI at the target display position determined in step 506, and superimposedly display the attribute information acquired in step 505 on the object of POI, thereby exactly fusing the attribute information with a real building, and achieving the effect of augmented reality. For example, when the object of POI is a shopping mall, the executing body may render the shopping mall at the target display position, and superimposedly display, e.g., the name of the shopping mall and activity information in the shopping mall on the object of POI.

As can be seen from Fig. 5, compared with the corresponding embodiment of Fig. 4, the display method in the present embodiment further acquires attribute information of an object of POI based on information of a current position, and superimposedly displays the attribute information on the object of POI, thereby exactly fusing the attribute information with a real building, and achieving the effect of augmented reality.

In the technical solution of the present disclosure, the acquisition, storage, and application of personal information of a user involved are in conformity with relevant laws and regulations, and does not violate public order and good customs.

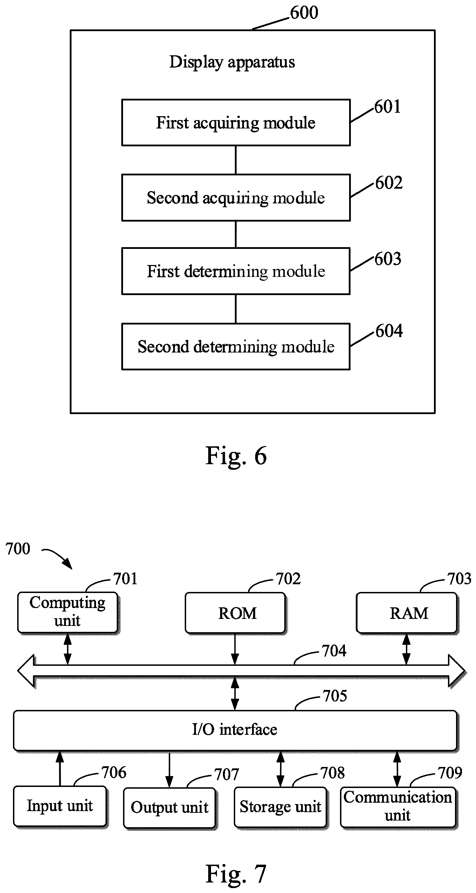

Further referring to Fig. 6, as an implementation of the method shown in the above figures, an embodiment of the present disclosure provides a display apparatus. The embodiment of the apparatus corresponds to the embodiment of the method shown in Fig. 2, and the apparatus may be specifically applied to various electronic devices.

As shown in Fig. 6, the display apparatus 600 of the present embodiment may include: a first acquiring module 601, a second acquiring module 602, a first determining module 603, and a second determining module 604. The first acquiring module 601 is configured to acquire a first image, where the first image is an image of an eyeball state of a driver; the second acquiring module 602 is configured to acquire a second image, where the second image is an image of a surrounding environment of a vehicle of the driver; the first determining module 603 is configured to determine an object of point of interest (POI) based on the first image and the second image; and the second determining module 604 is configured to determine a target display position of the object of POI, and display the object of POI at the target display position.

In the present embodiment, specific processing of the first acquiring module 601, the second acquiring module 602, the first determining module 603, and the second determining module 604 of the display apparatus 600 and the technical effects thereof may be referred to the related description of steps 201 to 204 in the corresponding embodiment of Fig. 2, respectively, and are not repeated here.

In some alternative implementations of the present embodiment, the first determining module includes: a first determining submodule configured to determine a direction of a sight line of the driver based on the first image; and a second determining submodule configured to determine the object of POI in the second image based on the direction of the sight line.

In some alternative implementations of the present embodiment, the second determining submodule includes: a judging unit configured to judge whether there is a target object in the direction of the sight line; and a determining unit configured to determine the object of POI in the second image based on a judging result.

In some alternative implementations of the present embodiment, the judging unit includes: a first determining subunit configured to determine a first target area in a world coordinate system based on the sight line direction; a second determining subunit configured to determine a second target area in the second image, the second target area corresponding to the first target area, based on a corresponding relationship between the world coordinate system and an image coordinate system corresponding to the second image; and a judging subunit configured to judge whether there is the target object within the second target area.

In some alternative implementations of the present embodiment, the determining unit includes: a third determining subunit configured to determine the target object as the object of POI, in response to there being the target object within the second target area, and the sight line of the driver staying on the target object for a preset duration; and a fourth determining subunit configured to determine the object of POI in the second image based on a preset rule, in response to there being no target object within the second target area.

In some alternative implementations of the present embodiment, the second determining module includes: a third determining submodule configured to determine, based on a corresponding relationship between the image coordinate system and a display coordinate system corresponding to a head up display screen, a target display position of the object of POI on the head up display screen.

In some alternative implementations of the present embodiment, the display apparatus further includes: a third acquiring module configured to acquire information of a current position of the vehicle; and a fourth acquiring module configured to acquire attribute information of the object of POI based on the information of the current position; and the second determining module includes: a first display submodule configured to display the object of POI at the target display position; and a second display submodule configured to superimposedly display the attribute information on the object of POI.

According to an embodiment of the present disclosure, the present disclosure further provides an electronic device, a readable storage medium, and a computer program product.

Fig. 7 shows a schematic block diagram of an example electronic device 700 that maybe configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may alternatively represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

AS shown in Fig. 7, the device 700 includes a computing unit 701, which may execute various appropriate actions and processes in accordance with a computer program stored in a read-only memory (ROM) 702 or a computer program loaded into a random access memory (RAM) 703 from a storage unit 708. The RAM 703 may further store various programs and data required by operations of the device 700. The computing unit 701, the ROM 702, and the RAM 703 are connected to each other through a bus 704. An input/output (I/O) interface 705 is also connected to the bus 704.

A plurality of components in the device 700 is connected to the I/O interface 705, including: an input unit 706, such as a keyboard and a mouse; an output unit 707, such as various types of displays and speakers; a storage unit 708, such as a magnetic disk and an optical disk; and a communication unit 709, such as a network card, a modem, and a wireless communication transceiver. The communication unit 709 allows the device 700 to exchange information/data with other devices through a computer network such as the Internet and/or various telecommunication networks.

The computing unit 701 may be various general purpose and/or specific purpose processing components having a processing capability and a computing capability. Some examples of the computing unit 701 include, but are not limited to, a central processing unit (CPU), a graphics processing unit (GPU), various specific purpose artificial intelligence (AI) computing chips, various computing units running a machine learning model algorithm, a digital signal processor (DSP), and any appropriate processor, controller, micro-controller, and the like. The computing unit 701 executes various methods and processes described above, such as the display method. For example, in some embodiments, the display method may be implemented as a computer software program that is tangibly included in a machine readable medium, such as the storage unit 708. In some embodiments, some or all of the computer programs may be loaded and/or installed onto the device 700 via the ROM 702 and/or the communication unit 709. When the computer program is loaded into the RAM 703 and executed by the computing unit 701, one or more steps of the display method described above may be executed. Alternatively, in other embodiments, the computing unit 701 may be configured to execute the display method by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input apparatus and at least one output apparatus, and send the data and instructions to the storage system, the at least one input apparatus and the at least one output apparatus.

Program codes for implementing the method of the present disclosure may be compiled using any combination of one or more programming languages. The program codes may be provided to a processor or controller of a general purpose computer, a specific purpose computer, or other programmable display apparatuses, such that the program codes, when executed by the processor or controller, cause the functions/operations specified in the flowcharts and/or block diagrams to be implemented. The program codes may be completely executed on a machine, partially executed on a machine, partially executed on a machine and partially executed on a remote machine as a separate software package, or completely executed on a remote machine or server.

In the context of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, a distributed system server, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions disclosed in the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A display method, comprising:
acquiring (201) a first image, wherein the first image is an image of an eyeball state of a driver;
acquiring (202) a second image, wherein the second image is an image of a surrounding environment of a vehicle of the driver;
determining (203) an object of point of interest (POI) based on the first image and the second image; and
determining (204) a target display position of the object of POI, and displaying the object of POI at the target display position.

2. The method according to claim 1, wherein the determining the object of point of interest (POI) based on the first image and the second image comprises:
determining (303) a direction of a sight line of the driver based on the first image; and
determining (304) the object of POI in the second image based on the direction of the sight line.

3. The method according to claim 2, wherein the determining the object of POI in the second image based on the direction of the sight line comprises:
judging whether there is a target object in the direction of the sight line; and
determining the object of POI in the second image based on a judging result.

4. The method according to claim 3, wherein the judging whether there is the target object in the direction of the sight line comprises:
determining a (404) first target area in a world coordinate system based on the direction of the sight line;
determining (405) a second target area in the second image, the second target area corresponding to the first target area based on a corresponding relationship between the world coordinate system and an image coordinate system corresponding to the second image; and
judging (406) whether there is the target object within the second target area.

5. The method according to claim 4, wherein the determining the object of POI in the second image based on the judging result comprises:
determining (407) the target object as the object of POI, in response to there being the target object within the second target area, and the sight line of the driver staying on the target object for a preset duration; and
determining (408) the object of POI in the second image based on a preset rule, in response to there being no target object within the second target area.

6. The method according to claim 5, wherein the determining the target display position of the object of POI comprises:
determining, based on a corresponding relationship between the image coordinate system and a display coordinate system corresponding to a head up display screen, a target display position of the object of POI on the head up display screen.

7. The method according to any one of claims 1 to 6, wherein after the determining the object of point of interest (POI) based on the first image and the second image, the method further comprises:
acquiring (504) information of a current position of the vehicle; and
acquiring (505) attribute information of the object of POI based on the information of the current position; and
the displaying the object of POI at the target display position comprises:
displaying the object of POI at the target display position; and
superimposedly displaying the attribute information on the object of POI.

8. A display apparatus, comprising:
a first acquiring module (601) configured to acquire a first image, wherein the first image is an image of an eyeball state of a driver;
a second acquiring module (602) configured to acquire a second image, wherein the second image is an image of a surrounding environment of a vehicle of the driver;
a first determining module (603) configured to determine an object of point of interest (POI) based on the first image and the second image; and
a second determining module (604) configured to determine a target display position of the object of POI, and display the object of POI at the target display position.

9. The apparatus according to claim 8, wherein the first determining module comprises:
a first determining submodule configured to determine a direction of a sight line of the driver based on the first image; and
a second determining submodule configured to determine the object of POI in the second image based on the direction of the sight line.

10. The apparatus according to claim 9, wherein the second determining submodule comprises:
a judging unit configured to judge whether there is a target object in the direction of the sight line; and
a determining unit configured to determine the object of POI in the second image based on a judging result.

11. The apparatus according to claim 10, wherein the judging unit comprises:
a first determining subunit configured to determine a first target area in a world coordinate system based on the direction of the sight line;
a second determining subunit configured to determine a second target area in the second image, the second target area corresponding to the first target area, based on a corresponding relationship between the world coordinate system and an image coordinate system corresponding to the second image; and
a judging subunit configured to judge whether there is the target object within the second target area.

12. The apparatus according to claim 11, wherein the determining unit comprises:
a third determining subunit configured to determine the target object as the object of POI, in response to there being the target object within the second target area, and the sight line of the driver staying on the target object for a preset duration; and
a fourth determining subunit configured to determine the object of POI in the second image based on a preset rule, in response to there being no target object within the second target area.

13. The apparatus according to any one of claims 8 to 12, wherein the apparatus further comprises:
a third acquiring module configured to acquire information of a current position of the vehicle; and
a fourth acquiring module configured to acquire attribute information of the object of POI based on the information of the current position; and
the second determining module comprises:
a first display submodule configured to display the object of POI at the target display position; and
a second display submodule configured to superimposedly display the attribute information on the object of POI.

14. A non-transitory computer-readable storage medium storing computer instructions, wherein the computer instructions cause the computer to execute the method according to any one of claims 1-7.

15. A computer program product, comprising a computer program, wherein the computer program, when executed by a processor, implements the method according to any one of claims 1 to 7.
